# EUROPÄISCHE PATENTSCHRIFT

(11) **EP 2 813 481 B1**
(45) Veröffentlichungstag und Bekanntmachung des Hinweises auf die Patenterteilung: **27.05.2015**
(21) Anmeldenummer: 13171234.1
(22) Anmeldetag: 10.06.2013
(51) Int. Cl.: C04B 38/00, C04B 35/04, C04B 35/043, C04B 35/626

(54) **Versatz zur Herstellung eines ungeformten feuerfesten keramischen Erzeugnisses, Verfahren zur Herstellung eines gebrannten feuerfesten keramischen Erzeugnisses, ein gebranntes feuerfestes keramisches Erzeugnis sowie die Verwendung eines ungeformten feuerfesten keramischen Erzeugnisses**
Formulation for producing an unshaped refractory ceramic product, method for the preparation of a fired refractory ceramic product, a fired refractory ceramic product as well as the use of an unshaped refractory ceramic product
Mélange pour la fabrication d'un produit céramique réfractaire non formé, procédé de fabrication d'un produit céramique réfractaire brûlé, produit céramique réfractaire brûlé et utilisation d'un produit céramique réfractaire non formé

(43) Veröffentlichungstag der Anmeldung: 17.12.2014
(73) Patentinhaber: Refractory Intellectual Property GmbH & Co. KG, 1100 Wien (AT)
(72) Erfinder: Eckstein, Ing. Wilfried, 8793 Trofaiach (AT)
(74) Vertreter: Berkenbrink, Kai-Oliver

(56) Entgegenhaltungen:
- EP-A1- 1 564 195
- CA-C- 2 137 983
- CN-A- 101 481 250
- US-A- 3 008 842
- US-A- 5 036 029

## Beschreibung

Die Erfindung betrifft einen Versatz zur Herstellung eines ungeformten feuerfesten keramischen Erzeugnisses, ein Verfahren zur Herstellung eines gebrannten feuerfesten keramischen Erzeugnisses, ein gebranntes feuerfestes keramisches Erzeugnis sowie die Verwendung eines ungeformten feuerfesten keramischen Erzeugnisses.

Ein Versatz bezeichnet bekanntermaßen eine Zusammensetzung aus einer oder mehrerer Komponenten, durch die mittels eines keramischen Brandes ein gebranntes feuerfestes keramisches Erzeugnis herstellbar ist. Der Begriff "feuerfestes keramisches Erzeugnis" im Sinne der Erfindung bezeichnet insbesondere keramische Erzeugnisse mit einer Einsatztemperatur von über 600°C und bevorzugt feuerfeste Werkstoffe gemäß DIN 51060, also Werkstoffe mit einem Kegelfallpunkt > SK17. Die Ermittlung des Kegelfallpunktes kann insbesondere gemäß DIN EN 993-12 erfolgen.

Feuerfeste keramische Erzeugnisse sind insbesondere auch in Form ungeformter feuerfester keramischer Erzeugnisse bekannt, also sogenannter "feuerfester Massen".

Ungeformte feuerfeste keramische Erzeugnisse beziehungsweise feuerfeste Massen werden insbesondere auch als Reparatur- und Pflegemassen verwendet. Eine dieser Verwendungen ist die Verwendung einer feuerfesten Masse als Spritzmasse, die zur Reparatur hochbeanspruchter Ofenbereiche dient. Eine weitere Verwendung einer feuerfesten Masse ist deren Verwendung als Tundishmasse. Tundishmassen dienen zur Auskleidung des Tundish (also der Zwischenpfanne beziehungsweise des Stahlgießverteilers) beim Vergießen von Stahl.

Weitere Anwendungen feuerfester Massen liegen in deren Verwendung als Stampf- oder Hinterfüllmassen.

Die Anforderungen, die beispielsweise an Spritz- oder Tundishmassen hinsichtlich ihrer feuerfesten Eigenschaften gestellt werden, sind hoch. So müssen aus Spritzmassen hergestellte Erzeugnisse eine dichte Matrix gegen Erosion und Korrosion bilden. Aus Tundishmassen hergestellte Auskleidungen müssen eine hohe Porosität aufweisen, um hierdurch eine gute Isolierung erreichen und damit Wärmeverluste im Tundish zu verringern. Gleichzeitig sollen Spritz- und Tundishmassen jedoch auch eine hoch feuerfeste Bindematrix bilden, was in der Regel nur durch eine sinterfreudige Zusammensetzung des Versatzes erreicht werden kann. Hierzu sind hohe Mengen an Bindemittel oder anderen niedrig schmelzenden Komponenten im Versatz erforderlich. Diese Komponenten senken bei den herrschenden Einsatztemperaturen der Massen, die regelmäßig im Bereich von etwa 1.400 bis 1.700°C liegen, jedoch deren Feuerfestigkeit.

CN 101 481 250 A offenbart einen Versatz der die folgenden Rohstoffe in den jeweils folgenden Massenanteilen enthält: Chrysolit: 56 %; Magnesiapulver: 6 %; Magnesit: 15 %; Koks: 20 %, Stärke: 3 %. US 3,008,842 offenbart einen Versatz, der die Komponenten totgebrannten Magnesit, Olivin und expandierten Perlit beinhaltet.

Der Erfindung liegt die Aufgabe zugrunde, einen Versatz zur Herstellung eines ungeformten feuerfesten keramischen Erzeugnisses zur Verfügung zu stellen, durch den ein gebranntes feuerfestes keramisches Erzeugnis herstellbar ist, wobei der Versatz insbesondere als Spritz-, Tundish-, Stampf- oder Hinterfüllmasse verwendbar sein soll. Ferner sollen aus dem Versatz herstellbare gebrannte feuerfeste keramische Erzeugnisse gute Verschleißeigenschaften, insbesondere gegen Erosion und Korrosion, sowie gleichzeitig eine hohe Feuerfestigkeit besitzen. Soweit der Versatz als Tundishmasse verwendet werden soll, soll ein daraus hergestelltes Erzeugnis ferner eine hohe Porosität aufweisen.

Eine weitere Aufgabe der Erfindung liegt darin, ein Verfahren zur Herstellung eines solch gebrannten feuerfesten keramischen Erzeugnisses zur Verfügung zu stellen.

Eine weitere Aufgabe der Erfindung liegt darin, ein gebranntes feuerfestes keramisches Erzeugnis mit den vorgenannten Eigenschaften zur Verfügung zu stellen.

Zur Lösung der erstgenannten Aufgabe wird erfindungsgemäß zur Verfügung gestellt ein Versatz zur Herstellung eines ungeformten feuerfesten keramischen Erzeugnisses umfassend:
- 55 bis 95 Masse-% wenigstens eines Rohstoffes auf Basis Magnesia,
- 5 bis 45 Masse-% wenigstens eines Rohstoffes auf Basis Magnesit in Form von Rohmagnesit und
- unter 10 Masse-% weiterer Komponenten,
jeweils bezogen auf die Gesamtmasse des Versatzes; wobei
- der Gesamtgehalt an Calciumcarbonat der Rohstoffe auf Basis Magnesit unter 10 Masse-% liegt;
bezogen auf die Gesamtmasse der Rohstoffe auf Basis Magnesit.

Überraschend wurde im Rahmen der Erfindung festgestellt, dass aus einem Versatz auf Basis Magnesia eine Spritz-, Tundish-, Stampf- oder Hinterfüllmasse herstellbar ist, wobei gleichzeitig ein aus dem Versatz herstellbares gebranntes feuerfestes keramisches Erzeugnis hervorragende Verschleißeigenschaften bei einer gleichzeitig hervorragenden Feuerfestigkeit aufweist, wenn der Versatz einen oder mehrere Rohstoffe auf Basis Magnesit in Form von Rohmagnesit aufweist, die einen besonders geringen Gesamtgehalt an Calciumcarbonat aufweisen.

Es wird vermutet, dass diese vorteilhaften Eigenschaften einer aus einem solchen Versatz hergestellten Spritz-, Tundish-, Stampf- oder Hinterfüllmasse auf den folgenden Umständen beruhen: Die Rohstoffe auf Basis Magnesit des erfindungsgemäßen Versatzes bestehen hauptsächlich aus Magnesiumcarbonat (MgCO₃). Ab einer Einsatztemperatur von etwa 600°C bei der Verwendung des erfindungsgemäßen Versatzes dissoziiert das Magnesiumcarbonat der Magnesit-Rohstoffe zu MgO und CO₂. Das dabei entstehende, kaustische MgO zeichnet sich durch eine äußerst hohe Reaktivität aus. Aufgrund dieser hohen Reaktivität des entstandenen, kaustischen MgO bildet sich eine Direktbindung MgO-MgO im Gefüge des aus dem Versatz hergestellten feuerfesten keramischen Erzeugnisses aus, die eine hohe Feuerfestigkeit des Erzeugnisses bewirkt. Bei Brenntemperaturen, die unter etwa 1.500°C liegen und die beispielsweise für die Einsatztemperaturen und den dabei erfolgenden Brand von Tundishmassen typisch sind, entsteht durch die Zersetzung der Magnesit-Rohstoffe in MgO und CO₂ eine erhöhte Porosität, welch im Einsatz des aus der Masse hergestellten gebrannten Erzeugnisses zu einer hervorragenden Isolierung führt. Gleichzeitig führt die Versinterung über das entstandene, kaustische MgO zu einer hohen Versinterung des Erzeugnisses und einer damit einhergehenden dichten Matrix, welche das gebrannte Erzeugnis beständig gegen Schlackenangriffe und Infiltration macht. Das gebrannte Erzeugnis weist damit einen hohen Widerstand gegen Erosion und Korrosion auf. Insbesondere weist ein aus dem erfindungsgemäßen Versatz hergestelltes gebranntes Erzeugnis eine sehr gute Resistenz gegen saure und hochaluminatische Schlacken auf.

Von zentraler Bedeutung für die Erfindung ist es, dass der Gesamtgehalt an Calciumcarbonat der Rohstoffe auf Basis Magnesit besonders gering ist, und erfindungsgemäß unter 10 Masse-% liegt, bezogen auf die Gesamtmasse der Rohstoffe auf Basis Magnesit. Denn erfindungsgemäß wurde festgestellt, dass höhere Gehalte an Calciumcarbonat (CaCO₃) in den Rohstoffen auf Basis Magnesit die Erosions- und Korrosionseigenschaften eines auf Basis eines solchen Versatzes hergestellten Erzeugnisses ebenso verschlechtern können wie dessen Feuerfestigkeit.

Erfindungsgemäß ist demnach vorgesehen, dass der Gesamtgehalt an Calciumcarbonat der Rohstoffe auf Basis Magnesit unter 10 Masse-% liegt, also beispielsweise auch unter 9 Masse-%, 8 Masse-%, 7 Masse-%, 6 Masse-%, 5 Masse-%, 4 Masse-%, 3 Masse-%, 2 Masse-%, 2,5 Masse-%, 2,2 Masse-%, 2,0 Masse-%, 1,8 Masse-%. 1,6 Masse-%, 1,4 Masse-%, 1,2 Masse-%, 1,0 Masse-% oder 0,8 Masse-%, jeweils bezogen auf die Gesamtmasse der Rohstoffe auf Basis Magnesit im erfindungsgemäßen Versatz. Diese Gehalte an Calciumcarbonat in den Rohstoffen auf Basis Magnesit beziehen sich auf den Gesamtgehalt an Calciumcarbonat in diesen Rohstoffen. Soweit der erfindungsgemäße Versatz daher beispielsweise verschiedene Rohstoffe auf Basis Magnesit aufweist, kann beispielsweise vorgesehen sein, dass die Rohstoffe auf Basis Magnesit unterschiedliche Gehalte an Calciumcarbonat aufweisen, die bei einigen dieser Rohstoffe beispielsweise auch über 10 Masse-%, bezogen auf diesen Rohstoff, liegen können, solange nur der Gesamtgehalt an Calciumcarbonat der Rohstoffe auf Basis Magnesit unter den vorgenannten Anteilen liegt.

Der Rohstoff auf Basis Magnesit liegt in Form von Rohmagnesit vor.

Der Anteil der Rohstoffe auf Basis Magnesit im Versatz kann bei wenigstens 5 Masse-% liegen, also beispielsweise auch bei wenigstens 6, 8, 10, 12, 14, 16 oder 18 Masse-%. Beispielsweise kann der Anteil der Rohstoffe auf Basis Magnesit im Versatz bei höchstens 45 Masse-% liegen, also beispielsweise auch bei höchstens 43, 42, 40, 38, 36, 34, 32, 30, 28, 26, 24, 22 oder 21 Masse-%.

Die hierin gemachten Anteile an Masse-% beziehen sich, soweit nicht anders angegeben, jeweils auf die Gesamtmasse des erfindungsgemäßen Versatzes beziehungsweise des erfindungsgemäßen gebrannten Erzeugnisses.

Bevorzugt liegen die Rohstoffe auf Basis Magnesit in einer geringen Korngröße vor, insbesondere in einer Korngröße < 3 mm, < 2 mm oder < 1 mm. Beispielsweise kann vorgesehen sein, dass die Rohstoffe auf Basis Magnesit zu wenigstens 50 Masse-% in einer Korngröße < 1 mm, < 0,5 mm oder auch < 0,1 mm im Versatz vorliegen (jeweils bezogen auf die Gesamtmasse der Rohstoffe auf Basis Magnesit). Es kann auch vorgesehen sein, dass die Rohstoffe auf Basis Magnesit in einer Korngröße d₉₀ (also mit einer Korngröße, in der wenigstens 90 Masse-% der entsprechenden Komponente, bezogen auf die Gesamtmasse der entsprechenden Komponente, unterhalb der angegebenen Korngröße vorliegen) < 1 mm, < 0,5 mm oder < 0,1 mm vorliegen.

Der Rohstoff auf Basis Magnesia kann beispielsweise in Form wenigstens einer der folgenden Rohstoffe vorliegen: Sintermagnesia oder Olivin ((Mg, Fe)₂ SiO₄).

Ebenso wie die Rohstoffe auf Basis Magnesit können auch die Rohstoffe auf Basis Magnesia in einer verhältnismäßig geringen Korngröße vorliegen, beispielsweise in einer Korngröße < 3 mm, < 2 mm oder < 1 mm. Beispielweise können die Rohstoffe auf Basis Magnesia mit einer Korngröße d₉₀ < 1 mm vorliegen. Insbesondere, falls der Versatz als Tundishmasse verwendet werden soll, kann vorgesehen sein, dass die Rohstoffe auf Basis Magnesia mit einer Korngröße d₉₀ < 1 mm, < 0,5 mm oder < 0,3 mm vorliegen.

Die Rohstoffe auf Basis Magnesia liegen in einem Anteil von wenigstens 55 Masse-% im Versatz vor, also beispielsweise auch in einem Anteil von wenigstens 56, 58, 60, 62, 64, 66, 68, 70, 72, 74, 76, 78 oder 79 Masse-%. Beispielsweise können die Rohstoffe auf Basis Magnesia in einem Anteil von höchstens 95 Masse-% im Versatz vorliegen, also beispielsweise auch in einem Anteil von höchstens 92, 90, 88, 86, 84, 82 oder 81 Masse-%.

Wie oben ausgeführt, hat sich erfindungsgemäß herausgestellt, dass sich höhere Anteile an Calciumcarbonat in den Rohstoffen auf Basis Magnesit negativ auf die Eigenschaften eines aus dem Versatz hergestellten Erzeugnisses auswirken können. Insofern kann vorgesehen sein, dass der Gehalt an Calciumoxid auch in den Rohstoffen auf Basis Magnesia verhältnismäßig gering ist. Beispielsweise kann vorgesehen sein, dass der Gesamtgehalt an Calciumoxid in den Rohstoffen auf Basis Magnesia unter 5 Masse-% liegt, also beispielsweise auch unter 4, 3, 2 oder 1 Masse-%, jeweils bezogen auf die Gesamtmasse an den Rohstoffen auf Basis Magnesia im Versatz.

In Hinblick auf den Gesamtversatz kann vorgesehen sein, dass der Gehalt an CaO im Versatz unter 5 Masse-% liegt, also beispielsweise auch unter 4 Masse-%, 3 Masse-%, 2 Masse-%, 1,8 Masse-%, 1,6 Masse-%, 1,4 Masse-%, 1,2 Masse-%, 1 Masse-%, 0,8 Masse-%, 0,6 Masse-%, 0,4 Masse-%, 0,2 Masse-% oder 0,1 Masse-%.

Um die Anteile an Calciumcarbonat beziehungsweise CaO im erfindungsgemäßen Versatz möglichst gering zu halten, kann vorgesehen sein, dass der erfindungsgemäße Versatz keine oder nur geringe Anteile an Kalkstein und Dolomit aufweist. Beispielsweise kann vorgesehen sein, dass die Gesamtmasse an diesen Rohstoffen im Versatz unter 5 Masse-% liegt, also beispielsweise auch unter 4, 3, 2 oder 1 Masse-%.

Es kann vorgesehen sein, dass der erfindungsgemäße Versatz als weitere Komponente einen oder mehrere Plastifizierer umfasst, beispielsweise wenigstens einen der folgenden Plastifizierer: Ton oder Bentonit. Plastifizierer kann der Versatz in Anteilen von wenigstens 0,5 Masse-% aufweisen, also beispielsweise auch in Anteilen von wenigstens 1 Masse-% oder 1,3 Masse-%. Beispielsweise kann der Versatz Anteile an Plastifizierer von höchstens 4 Masse-% aufweisen, also beispielsweise auch von höchstens 3 Masse-%, 2 Masse-% oder 1,7 Masse-%.

Der Versatz kann als weitere Komponente beispielsweise Sinterhilfsmittel aufweisen, beispielsweise Borsäure. Sinterhilfsmittel kann der Versatz beispielsweise in Anteilen von wenigstens 0,2 Masse-% aufweisen, also beispielsweise auch in Anteilen von wenigstens 0,3 oder 0,4 Masse-%. Beispielsweise kann der Versatz Sinterhilfsmittel in Anteilen von höchstens 1,5 Masse-% aufweisen, also beispielsweise auch in Anteilen von höchstens 1,3 Masse-%, 1 Masse-% oder 0,7 Masse-%.

Als weitere Komponente kann der Versatz wenigstens ein Bindemittel aufweisen, beispielsweise wenigstens eines der folgenden Bindemittel: Wasserglas oder Natriumhexametaphosphat. Beispielsweise kann der Versatz Bindemittel in Anteilen von wenigstens 0,5 Masse-% aufweisen, also beispielsweise auch in Anteilen von wenigstens 1 Masse-%, 1,3 Masse-% oder 1,5 Masse-%. Beispielsweise kann der Versatz Anteile an Bindemitteln von höchstens 5 Masse-% aufweisen, also beispielsweise auch von höchstens 4 oder 3,5 Masse-%.

Als weitere Komponente kann der Versatz Papier- oder Zellulosefasern aufweisen, insbesondere als Porenbildner und Haftverbesserer. Papier- und/oder Zellulosefasern kann der Versatz beispielsweise in Anteilen von wenigstens 0,2 Masse-% aufweisen, also beispielsweise auch in Anteilen von wenigstens 0,3 Masse-%, 0,4 Masse-%, 0,5 Masse-%, 0,7 oder 0,9 Masse-%. Beispielsweise kann der Versatz Anteile an Papier- und/oder Zellulosefasern in Anteilen von höchstens 2,0 Masse-% aufweisen, also beispielsweise auch in Anteilen von höchstens 1,5 oder 1,2 Masse-%.

Erfindungsgemäß ist vorgesehen, dass der erfindungsgemäße Versatz neben Rohstoffen auf Basis Magnesia und Magnesit, insbesondere in Form von Sintermagnesia, Olivin und Rohmagnesit, Anteile an weiteren Komponenten unter 10 Masse-% aufweist, also beispielsweise auch in Anteilen unter 9, 8, 7, 6 oder 5 Masse-%. Nach einer Fortführung dieses Erfindungsgedankens kann vorgesehen sein, dass der erfindungsgemäße Versatz neben Rohstoffen in Form von Sintermagnesia, Olivin und Rohmagnesit sowie den weiteren Komponenten Wasserglas, Natriumhexametaphosphat, Ton und Bentonit Anteile an weiteren Komponenten unter 5 Masse-% aufweist, also beispielsweise auch in Anteilen unter 4 oder 3 Masse-%.

Erfindungsgemäß kann vorgesehen sein, dass der Versatz einen organischen Binder aufweist, insbesondere einen temporären Binder, soweit der Versatz als Tundishmasse in Form einer Tundishrieselmasse Verwendung finden soll. Beispielsweise kann der Versatz wenigstens einen der folgenden organischen Binder aufweisen: Phenolharz, Glucose oder Citronensäure. Beispielsweise kann der Versatz organische Binder in Anteilen von wenigstens 1 Masse-% aufweisen, also beispielsweise auch in Anteilen von wenigstens 2 oder 2,5 Masse-%. Beispielsweise kann vorgesehen sein, dass der Versatz Anteile an organischen Bindern von höchstens 5 Masse-% aufweist, also beispielsweise auch von höchstens 4 oder 3,5 Masse-%.

Erfindungsgemäß hat sich ferner herausgestellt, dass hohe Anteile an Eisenoxid (Fe₂O₃) und Tonerde (Al₂O₃) im Versatz die Eigenschaften eines aus dem Versatz hergestellten Erzeugnisses negativ beeinflussen können. Insofern kann vorgesehen sein, dass die Anteile an Fe₂O₃ im Versatz unter 3,5 Masse-% liegen, also beispielsweise auch unter 3 Masse-%, 2,5 Masse-%, 2 Masse-%, 1,5 Masse-% oder 1,0 Masse-%. Beispielsweise kann vorgesehen sein, dass die Anteile an Al₂O₃ im Versatz unter 5 Masse-% liegen, also beispielsweise auch unter 4 Masse-%, 3 Masse-%, 2,5 Masse-%, 2 Masse-%, 1,5 Masse-% oder unter 1,0 Masse-%.

Die zuvor gemachten Angaben zu den Gehalten an Fe₂O₃ und Al₂O₂ im Versatz sowie die oben gemachten Angaben zum Gehalt an CaO im Versatz gelten entsprechend für die Gehalte an diesen Oxiden im erfindungsgemäßen Erzeugnis.

Es kann vorgesehen sein, dass der Versatz zusätzlich Wasser als weitere Komponente aufweist. Hierzu kann der erfindungsgemäße Versatz mit den aus dem Stand der Technik bekannten Anteilen an Wasser gemischt werden, um ihm eine für die jeweilige Verwendung geeignete Konsistenz zu verleihen. Zur Verwendung des Versatzes als Spritzmasse kann in den Versatz beispielsweise, wie aus dem Stand der Technik bekannt, erst unmittelbar vor dem Auftragen Wasser eingedüst werden. Soweit der Versatz beispielsweise als Tundishmasse in Form einer Tundishschlämmspritzmasse verwendet werden soll, kann der Versatz beispielsweise vor dem Aufsprühen auf das Tundishfutter mit Wasser angemischt werden. Falls der Versatz beispielsweise als Tundishrieselmasse verwendet werden soll, kann der Versatz beispielsweise ohne oder nur mit geringen Mengen Wasser (beispielsweise unter 3 Masse-%) angemacht werden, und beispielsweise nur organische, temporäre Binder, wie oben angegeben, aufweisen.

Gegenstand der Erfindung ist ferner ein Verfahren zur Herstellung eines gebrannten feuerfesten keramischen Erzeugnisses, das die folgenden Schritte umfasst:
- Zur Verfügungstellung eines erfindungsgemäßen Versatzes;
- Aufbringen des Versatzes auf den gewünschten Verwendungsort;
- Brennen des aufgebrachten Versatzes zu einem gebrannten feuerfesten keramischen Erzeugnis.

Vor oder während des Aufbringens des Versatzes auf den gewünschten Verwendungsort kann der Versatz, wie oben beschrieben, gegebenenfalls noch mit Wasser angemacht werden.

Beispielsweise kann auch vorgesehen sein, dass der mit Wasser angemachte Versatz gemischt wird, beispielsweise falls der Versatz als Tundishmasse in Form einer Tundishschlämmspritzmasse verwendet werden soll.

Der - gegebenenfalls mit Wasser angemachte - Versatz kann anschließend seinem gewünschten Zweck entsprechend verwendet werden, beispielsweise als Spritz-, Tundish-, Stampf- oder Hinterfüllmasse. Hierzu wird der Versatz auf den gewünschten Verwendungsort aufgebracht, also beispielsweise auf einen zu reparierenden Ofenbereich, soweit der Versatz als Spritzmasse verwendet wird, oder auf ein Tundishfutter, soweit der Versatz als Tundishmasse verwendet wird.

Gegenstand der Erfindung ist ferner die Verwendung des erfindungsgemäßen Versatzes als Spritzmasse, Tundishmasse, Stampfmasse oder Hinterfüllmasse.

Soweit der erfindungsgemäße Versatz als Spritzmasse verwendet wird, kann die Spritzmasse insbesondere für die folgenden Aggregate eingesetzt werden: Elektrolichtbogenofen, Konverter, Stahlgießpfanne, Roheisenpfanne, RH-Anlage oder Aggregate der Nichteisenmetallindustrie.

Soweit der erfindungsgemäße Versatz als Tundishmasse verwendet wird, kann die Tundishmasse insbesondere als Verschleißfuttermasse im Stahlgießverteiler (Tundish) eingesetzt werden.

Das Brennen des aufgebrachten Versatzes zu einem gebrannten feuerfesten keramischen Erzeugnis, also einer gesinterten feuerfesten Masse, kann, wie im Stand der Technik bekannt, vor oder auch erst während der Anwendung der Masse erfolgen.

Beispielsweise kann der keramische Brand der Masse bei deren Verwendung als Spritzmasse oder Tundishrieselmasse erst während der Anwendung der Masse erfolgen. Ein als Tundishmasse in Form einer Tundishschlämmspritzmasse verwendeter Versatz kann beispielsweise vor seine Anwendung, wie aus dem Stand der Technik bekannt, erst getrocknet werden, bevorzugt unter 600°C, und anschließend bei etwa 1.000°C gebrannt werden, bevor der mit der Masse zugestellte Tundish verwendet wird.

Durch den Brand des Versatzes wird ein gebranntes feuerfestes keramisches Erzeugnis erhalten, also ein feuerfestes gesintertes Erzeugnis.

Gegenstand der Erfindung ist auch ein solch gebranntes feuerfestes keramisches Erzeugnis, das durch ein erfindungsgemäßes Verfahren hergestellt ist.

Soweit der Versatz als Tundishmasse verwendet wird, stellt die nach dem Brand der Tundishmasse aus dieser erhaltene, feuerfeste, gesinterte Auskleidung des Tundish ein solch gebranntes feuerfestes keramisches Erzeugnis dar. Soweit der Versatz als Spritzmasse verwendet wird, stellt die nach dem Brand der Spritzmasse aus dieser erhaltene, feuerfeste, gesinterte Auskleidung des Ofens ein solch gebranntes feuerfestes keramisches Erzeugnis dar.

Das Brennen des Versatzes zu einem gebrannten feuerfesten keramischen Erzeugnis kann bei den bei der Anwendung des Erzeugnisses regelmäßig herrschenden Temperaturen erfolgen, also beispielsweise bei Temperaturen im Bereich von 1.350°C bis 1.700°C, also beispielsweise bei etwa 1.400°C, soweit aus dem Versatz eine Tundishmasse hergestellt worden ist. Soweit aus dem Versatz eine Spritzmasse hergestellt worden ist, kann diese beispielsweise bei Temperaturen im Bereich von 1.550°C bis 1.700°C gebrannt werden, beispielsweise bei Temperaturen von etwa 1.600°C.

Das Gefüge eines erfindungsgemäßen gebrannten Erzeugnisses zeichnet sich durch charakteristische Phasen aus. So ist aufgrund des geringen Gehaltes an Calciumcarbonat der Rohstoffe auf Basis Magnesit der Anteil an calciumreichen Phasen verhältnismäßig gering. So weisen Massen, die aus üblichen, calciumcarbonatreichen Versätzen erstellt sind, beispielsweise regelmäßig Anteile an Merwinit (Ca₃Mg(SiO₄)₂) von über 0,5 Masse-% auf, teilweise auch von über 10 Masse-%. Ein erfindungsgemäßes Erzeugnis weist jedoch regelmäßig Anteile an Merwinit von < 0,5 Masse-% auf, regelmäßig auch von < 0,1 Masse-%.

Ferner zeichnet ein gebranntes erfindungsgemäßes Erzeugnis im Gegensatz zu gattungsgemäßen Erzeugnissen aus dem Stand der Technik, die wiederum auf Basis calciumcarbonatreicher Rohstoffe erstellt sind, durch einen hohen Anteil an Forsterit (Mg₂(SiO₄)) aus. Beispielsweise kann der Anteil an Forsterit im erfindungsgemäßen Erzeugnis > 5 Masse-% liegen, beispielsweise auch > 8 Masse-%. Gattungsgemäße Erzeugnisse nach dem Stand der Technik weisen regelmäßig keine oder nur sehr geringe Anteile an Forsterit auf.

Der Silicatanteil der vorbezeichneten Phasen des erfindungsgemäßen gebrannten Erzeugnisses stammt beispielsweise von natürlichen Verunreinigungen der verwendeten Rohstoffe Olivin oder Rohmagnesit oder auch von anderen Komponenten des Versatzes, insbesondere Bindemittel in Form von Wasserglas oder Plastifizierer in Form von Ton oder Bentonit.

Ein erfindungsgemäßes gebranntes Erzeugnis zeichnet sich durch hervorragende physikalische Eigenschaften aus, verglichen mit den physikalischen Eigenschaften für solche Erzeugnisse, die auf Basis eines nicht erfindungsgemäßen Versatzes erstellt sind.

So weisen die gebrannten Erzeugnisse eine hoch feuerfeste Bindematrix auf. Soweit der Versatz als Spritzmasse verwendet und bei Temperaturen im Bereich von etwa 1.550 bis 1.700°C gebrannt wurde, weist das erhaltene Erzeugnis eine dichte Matrix auf. Soweit der Versatz als Tundishmasse verwendet und bei Temperaturen im Bereich von etwa 1.400°C gebrannt wurde, weist das erhaltene Erzeugnis eine hohe Porosität auf.

In der nachfolgenden Tabelle 1 werden zwei Ausführungsbeispiele für erfindungsgemäße Versätze angegeben, bezeichnet mit V2 und V4. Bei den mit V1 und V3 bezeichneten Versätzen handelt es sich um Vergleichsbeispiele für Versätze, die gemäß dem Stand der Technik zusammengesetzt sind. Bei den Versätzen V1 und V2 handelt es sich jeweils um Versätze, die als Spritzmasse Verwendung finden. Die Versätze V3 und V4 werden jeweils als Tundishrieselmasse verwendet.

**Tabelle 1**

| Rohstoff | V1 | V2 | V3 | V4 |
|---|---|---|---|---|
| Sintermagnesia 1-3 mm | 25 | 17 | | |
| Sintermagnesia >0,2-1 mm | 42 | 34 | 36 | 21 |
| Sintermagnesia Mehl >0-0,2 mm | 25 | 25 | 30 | 25 |
| Olivin >0-0,5 mm | | | 30 | 30 |
| Rohmagnesit >1-3 mm | | 10 | | |
| Rohmagnesit >0-1 mm | | 10 | | 20 |
| Wasserglas | | | 2 | 2 |
| Natriumphosphat | 5 | 2,5 | | |
| Ton | 3 | 1,5 | 1 | 1 |
| Zellulosefasern | | | 1 | 1 |

Die verwendete Sintermagnesia weist eine hohe Reinheit von etwa 95 Masse-% MgO auf, bezogen auf die Sintermagnesia. Der verwendete Rohmagnesit weist einen Anteil von etwa 1,5 Masse-% Calciumcarbonat auf, bezogen auf den Rohmagnesit.

Die Spritzmassen V1 und V2 wurden zur Reparatur von Öfen verwendet und durch die bei der Anwendung herrschenden Temperaturen von 1.600°C einem keramischen Brand unterworfen, so dass aus diesen Massen ein gebranntes feuerfestes keramisches Erzeugnis erhalten wurde. Die Versätze V3 und V4 wurden zur Zustellung je eines Tundish verwendet. Hierzu wurden die Massen V3 und V4 mit Wasser angemischt und anschließend auf das Tundishfutter gesprüht, anschließend bei etwa 500°C getrocknet und schließlich auf etwa 1.000°C aufgeheizt. Der endgültige keramische Brand erfolgte anschließend bei der Anwendung des Tundish bei etwa 1.400°C.

In Tabelle 2 sind die physikalischen Eigenschaften von aus den Versätzen gemäß V1 bis V4 hergestellten, gebrannten feuerfesten keramischen Erzeugnissen gegenübergestellt, wobei das aus dem Versatz V1 erstellte Erzeugnis mit E1, das aus dem Versatz V2 erstellte Erzeugnis mit E2, das aus dem Versatz V3 erstellte Erzeugnis mit E3 und das aus dem Versatz V4 erstellte Erzeugnis mit E4 gekennzeichnet ist.

**Tabelle 2**

| Eigenschaft | E1 | E2 | E3 | E4 |
|---|---|---|---|---|
| Kaltdruckfestigkeit [N/mm²] | 83,0 | 101,0 | 6,3 | 5,0 |
| Rohdichte [g/cm³] | 2,8 | 2,9 | 1,8 | 1,6 |
| Porosität [Vol.-% ] | 18,5 | 16,5 | 44,5 | 54,3 |

Die Kaltdruckfestigkeit, Rohdichte und Porosität wurden bestimmt gemäß DIN EN ISO 1927-6: 2012.

Die beigefügten Abbildungen sind Ansichten auf Schliffbilder von gebrannten feuerfesten keramischen Erzeugnissen.

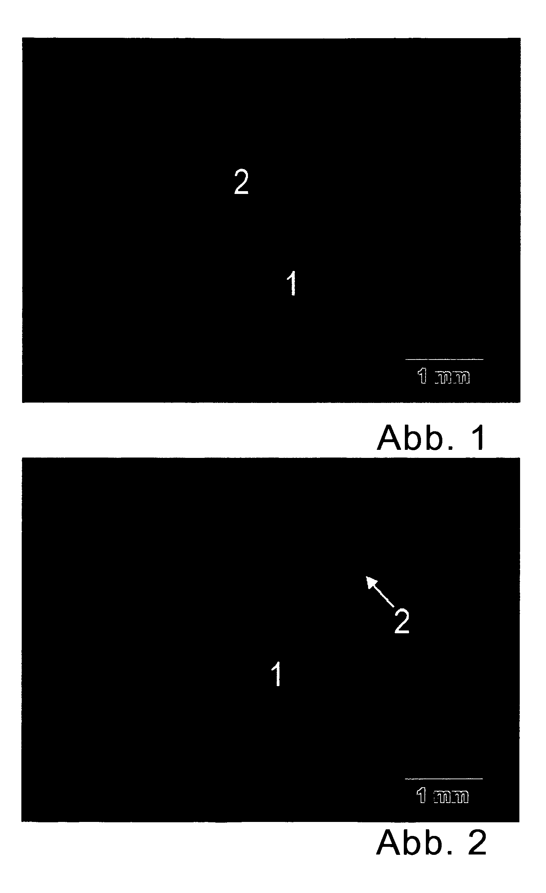

Die Abbildungen 1 und 2 zeigen bei 1.600°C gebrannte Spritzmassen, wobei der der Spritzmasse gemäß Abbildung 1 zugrunde liegende Versatz ohne Rohstoff auf Basis Magnesit und der der Spritzmasse gemäß Abbildung 2 zugrunde liegende Versatz erfindungsgemäß zusammengesetzt ist und einen Anteil von 20 Masse-% Rohmagnesit aufweist. Mit dem Bezugszeichen 1 ist Magnesia und mit dem Bezugszeichen 2 sind Poren im Gefüge gekennzeichnet.

Gut zu erkennen ist, dass das gebrannte Erzeugnis gemäß Abbildung 2 ein dichteres und gleichmäßigeres Gefüge aufweist als das Erzeugnis gemäß Abbildung 1.

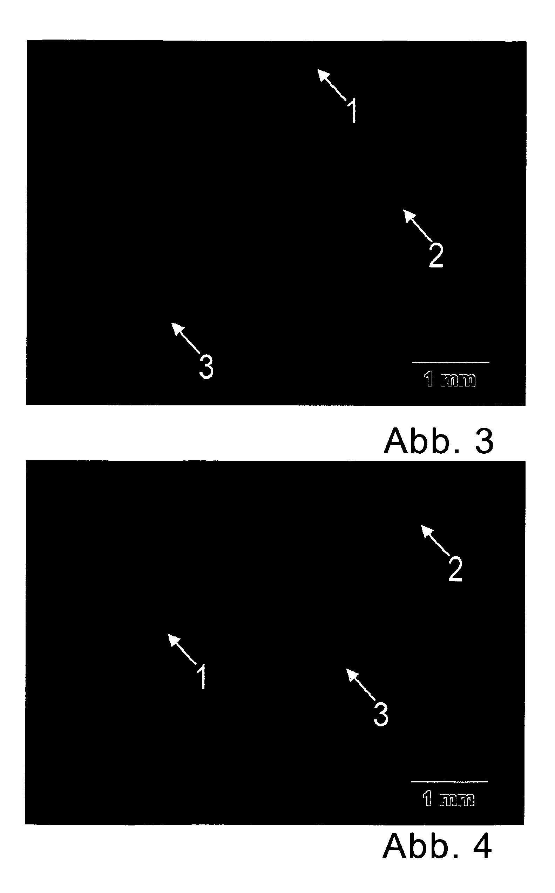

Die Abbildungen 3 und 4 zeigen bei 1.400°C gebrannte Tundishmassen. Dabei ist der, der Tundishmasse gemäß Abbildung 3 zugrunde liegende Versatz gemäß dem Stand der Technik zusammengesetzt, während der der Tundishmasse gemäß Abbildung 4 zugrunde liegende Versatz erfindungsgemäß zusammengesetzt ist und einen Anteil von 20 Masse-% Rohmagnesit aufweist. Mit dem Bezugszeichen 1 ist hier wiederum Magnesia und mit dem Bezugszeichen 2 sind Poren gekennzeichnet; ferner ist im Gefüge erkennbares Olivin mit dem Bezugszeichen 3 gekennzeichnet.

Hier ist das deutlich porösere Gefüge des Erzeugnisses gemäß Abbildung 4 gegenüber dem Erzeugnis gemäß Abbildung 3 zu erkennen.

## Patentansprüche

1. Versatz zur Herstellung eines ungeformten feuerfesten keramischen Erzeugnisses, umfassend:
1.1 55 bis 95 Masse-% wenigstens eines Rohstoffes auf Basis Magnesia,
1.2 5 bis 45 Masse-% wenigstens eines Rohstoffes auf Basis Magnesit in Form von Rohmagnesit und
1.3 unter 10 Masse-% weiterer Komponenten, jeweils bezogen auf die Gesamtmasse des Versatzes; wobei
1.4 der Gesamtgehalt an Calciumcarbonat der Rohstoffe auf Basis Magnesit unter 10 Masse-% liegt, bezogen auf die Gesamtmasse der Rohstoffe auf Basis Magnesit.

2. Versatz nach Anspruch 1 mit Rohstoffen auf Basis Magnesia in Form wenigstens einer der folgenden Rohstoffe:
Sintermagnesia oder Olivin.

3. Versatz nach wenigstens einem der vorgenannten Ansprüche, bei dem wenigstens eines der folgenden Oxide maximal den jeweils angegebenen Anteil aufweist:
CaO < 5 Masse-%;
Fe₂O₃ < 3,5 Masse-%;
Al₂O₃ < 3,0 Masse-%;
jeweils bezogen auf die Gesamtmasse des Versatzes.

4. Verfahren zur Herstellung eines gebrannten feuerfesten keramischen Erzeugnisses, umfassend die folgenden Schritte:
4.1 Zur Verfügungstellung eines Versatzes gemäß wenigstens einem der vorgenannten Ansprüche;
4.2 Aufbringen des Versatzes auf den gewünschten Verwendungsort;
4.3 Brennen des aufgebrachten Versatzes zu einem gebrannten feuerfesten keramischen Erzeugnis.

5. Erzeugnis, hergestellt durch ein Verfahren nach Anspruch 4, das wenigstens eine der folgenden Phasen in den jeweils angegebenen Anteilen aufweist:
Forsterit: > 5 Masse-%;
Merwinit: < 0,5 Masse-%;
jeweils bezogen auf die Gesamtmasse des Erzeugnisses.

6. Erzeugnis, hergestellt durch ein Verfahren nach Anspruch 4, oder nach Anspruch 5, bei dem wenigstens eines der folgenden Oxide maximal den jeweils angegebenen Anteil aufweist:
CaO < 5 Masse-%;
Fe₂O₃ < 3,5 Masse-%;
Al₂O₃ < 3,0 Masse-%;
jeweils bezogen auf die Gesamtmasse des Erzeugnisses.

7. Verwendung des Versatzes nach wenigstens einem der Ansprüche 1 bis 3 als Spritzmasse, Tundishmasse, Stampfmasse oder Hinterfüllmasse.

## Claims

1. A batch for producing an unformed refractory ceramic product comprising:
1.1 55 to 95 % by mass of at least one magnesia-based raw material,
1.2 5 to 45 % by mass of at least one magnesite-based raw material in the form of raw magnesite and
1.3 less than 10 % by mass of further components, each relative to the total mass of the batch; wherein
1.4 the total calcium carbonate content of the magnesite-based raw materials lies below 10 % by mass relative to the total mass of the magnesite-based raw materials.

2. The batch according to claim 1 with magnesia-based raw materials in the form of at least one of the following raw materials:
sintered magnesia or olivine.

3. The batch according to at least one of the aforementioned claims, wherein at least one of the following oxides exhibits the maximum fraction indicated in each case:
CaO < 5 % by mass;
Fe₂O₃ < 3.5 % by mass;
Al₂O₃ < 3.0 % by mass;
relative to the total mass of the batch in each case.

4. A method for producing a fired refractory ceramic product comprising the following steps:
4.1 provision of a batch according to at least one of the aforementioned claims;
4.2 application of the batch to the desired production site;
4.3 firing of the applied batch into a fired refractory ceramic product.

5. A product made using a method according to claim 4 which exhibits at least one of the following phases in the fractions indicated in each case:
forsterite: > 5 % by mass;
merwinite: < 0.5 % by mass;
relative to the total mass of the product in each case.

6. The product made using a method according to claim 4 or according to claim 5, wherein at least one of the following oxides exhibits at most the fraction indicated in each case:
CaO < 5 % by mass;
Fe₂O₃ < 3.5 % by mass;
Al₂O₃ < 3.0 % by mass;
relative to the total mass of the product in each case.

7. Use of the batch according to at least one of the claims 1 to 3 as the injection mass, tundish mass, ramming mass or backfilling mass.

## Revendications

1. Mélange qui est destiné à fabriquer un produit céramique réfractaire n'ayant pas subi de mise en forme, et qui comprend :
1.1 55 à 95 % en masse d'au moins une matière première à base de magnésie,
1.2 5 à 45 % en masse d'au moins une matière première à base de magnésite sous forme de magnésite crue, et
1.3 moins de 10 % en masse d'autres constituants, toutes les indications se rapportant à la masse totale dudit mélange ;
1.4 les matières premières à base de la magnésite ayant une teneur globale en carbonate de calcium inférieure à 10 % en masse, par rapport à la masse totale des matières premières à base de magnésite.

2. Mélange selon la revendication 1, comportant des matières premières à base de magnésie lesquelles se présentent sous forme d'au moins une des matières premières suivantes : magnésie calcinée ou olivine

3. Mélange selon l'une au moins des revendications précitées, dans lequel les proportions d'au moins un des oxydes suivants sont, pour chacun d'entre eux, inférieures ou égales aux valeurs indiquées :
CaO < 5 % en masse ;
Fe₂O₃ < 3,5 % en masse ;
Al₂O₃ < 3,0 % en masse ;
lesdites valeurs se rapportant à la masse totale dudit mélange.

4. Procédé qui est destiné à fabriquer un produit céramique réfractaire ayant subi une cuisson, et qui comprend les étapes suivantes :
4.1 fournir un mélange selon l'une au moins des revendications précités ;
4.2 appliquer ledit mélange sur le site de mise en oeuvre souhaité ;
4.3 soumettre le mélange ainsi appliqué à une cuisson pour ainsi obtenir un produit céramique réfractaire ayant subi une cuisson.

5. Produit qui est fabriqué en mettant en oeuvre un procédé selon la revendication 4, et qui comporte l'une au moins des phases suivantes dont les proportion correspondent, pour chacune d'entre elles, aux valeurs indiquées :
forsterite : > 5 % en masse ;
merwinite : < 0,5 % en masse ;
lesdites valeurs se rapportant à la masse totale dudit produit.

6. Produit qui est fabriqué en mettant en oeuvre un procédé selon la revendication 4, ou selon la revendication 5, et qui comporte l'un au moins des oxydes suivants dont les proportion correspondent, pour chacun d'entre eux, aux valeurs indiquées :
CaO < 5 % en masse ;
Fe₂O₃ < 3,5 % en masse ;
Al₂O₃ < 3,0 % en masse ;
lesdites valeurs se rapportant à la masse totale dudit produit.

7. Utilisation du mélange selon l'une au moins des revendications 1 à 3, en tant que masse destinée à être injectée, à appliquée par un répartiteur de coulée, à être compactée, ou bien en tant que masse de remblayage.
